(19) Europäisches Patentamt
European Patent Office
Office européen des brevets

(11) EP 3 508 070 A1

(12) **EUROPEAN PATENT APPLICATION**
published in accordance with Art. 153(4) EPC

(43) Date of publication:
**10.07.2019 Bulletin 2019/28**

(21) Application number: **17846739.5**

(22) Date of filing: **04.09.2017**

(51) Int Cl.:
***A23L 5/00*** *(2016.01)* ***B65D 65/40*** *(2006.01)*

(86) International application number:
**PCT/JP2017/031770**

(87) International publication number:
**WO 2018/043736 (08.03.2018 Gazette 2018/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **05.09.2016 PCT/JP2016/076035**

(71) Applicant: **Hitachi Chemical Company, Ltd.**
**Chiyoda-ku**
**Tokyo 100-6606 (JP)**

(72) Inventor: **MIYATA, Hiroyuki**
**Tokyo 100-6606 (JP)**

(74) Representative: **Hoffmann Eitle**
**Patent- und Rechtsanwälte PartmbB**
**Arabellastraße 30**
**81925 München (DE)**

# (54) FILM FOR FOOD PACKAGING, FILM CONTAINER, AND FOOD PROVIDING METHOD

(57) The present invention in an aspect relates to a food providing method for providing two or more types of food to at least two groups, comprising: wrapping a first food with a first film for sorting in order to provide the first food to a first group; and wrapping a second food with a second film having a color different from that of the first film for sorting in order to provide the second food to a second group.

EP 3 508 070 A1

## Description

### Technical Field

The present invention relates to a food wrapping film, a film-accommodating product, and a food providing method.

### Background Art

In the kitchen of dining facilities and the like, a meal is provided to each particular person corresponding to the type of food for use in some cases. Food provision corresponding to the type is conventionally performed by making containers having different colors available in advance, and putting food in a container, such that the color of the container corresponds to the type of food. In Patent Literature 1, a container for use in the kitchen or for food and/or drink is disclosed, of which outer body surface is coated with a titanium oxide film to develop an interference color between the film and a stainless steel material; and further, optional color-coding of the container for identification depending on the food and/or drink to be accommodated is described.

### Citation List

### Patent Literature

Patent Literature 1: Japanese Unexamined Patent Publication No. 2001-161533.

### Summary of Invention

### Technical Problem

However, when food is provided using the container described in Patent Literature 1, it is necessary to make a large number of containers having different colors available to be separately handled without confusion, and thus operation for providing food is complicated. A novel provision method is therefore desired.

Accordingly, an object of the present invention is to provide a food providing method through easy sorting depending on the purpose, and a food wrapping film and a film-accommodating product which can be suitably used in the provision method.

### Solution to Problem

The present invention in an aspect relates to a food wrapping film which contains a thermoplastic resin and a red colorant. In this aspect, preferably, the food wrapping film further contains a polyester-based plasticizer having a number average molecular weight of 1000 to 1800. Preferably, the food wrapping film further contains a polyglycerol fatty acid ester.

The present invention in another aspect relates to a food wrapping film which contains a thermoplastic resin and a yellow colorant. In this aspect, preferably, the food wrapping film further contains a polyester-based plasticizer having a number average molecular weight of 1000 to 1800. Preferably, the food wrapping film further contains a polyglycerol fatty acid ester.

The present invention in another aspect relates to a rolled food wrapping film with a box comprising the food wrapping film, a core material having the food wrapping film rolled thereon, and a box accommodating the food wrapping film and the core material, wherein the box has a blade portion for cutting the food wrapping film.

The present invention in another aspect relates to a food providing method for providing two or more types of food to at least two groups, comprising the steps of wrapping a first food with a first film for sorting in order to provide the first food to a first group, and wrapping a second food with a second film having a color different from that of the first film for sorting in order to provide the second food to a second group.

In this method, depending on the purpose of food provision, foods are wrapped with a first film or a second film having different colors from each other, to be sorted and thereby provided to at least two groups. Accordingly, the foods can be easily sorted and provided depending on the purpose of food provision, and the group to which each food belongs can be visually identified easily after provision. In this method, films for identification can change the shape depending on the food to be provided. Accordingly, the food to be provided can be freely set. Further, when not in use, the film can be stored in the form of a film-accommodating product, which is not bulky.

A first film is preferably the film containing a thermoplastic resin and a red colorant described above. A second

film is preferably the film containing a thermoplastic resin and a yellow colorant described above. With use of such colored films, the identification of the group after provision is made more easily.

In the food providing method described above, the first food may comprise a first allergen and the first group may be constituted by persons having no allergic symptoms to the first allergen, whereas the second food may comprise a second allergen and the second group may be constituted by persons having no allergic symptoms to the second allergen.

**Advantageous Effects of Invention**

According to the present invention, a food providing method capable of easily sorting and providing foods depending on the purpose, and a food wrapping film and a film-accommodating product for suitable use in the provision method can be provided.

**Brief Description of Drawings**

Figure 1 is a perspective view showing a film-accommodating product in an embodiment.

**Description of Embodiments**

Embodiments of the present invention are described in detail as follows. Note that an expression "X to Y" (X and Y are any numbers) represents any number of X or more and Y or less. The any number is preferably more than X and Y or less, X or more and less than Y, or more than X and less than Y.

First, a food wrapping film especially suitable for use in the food providing method of the present embodiment is described. The film in an embodiment contains a thermoplastic resin and a red colorant (hereinafter referred to also as "red film"). The film in another embodiment contains a thermoplastic resin and a yellow colorant (hereinafter referred to also as "yellow film"). These films are suitably used as films for food wrapping (food packaging), and particularly suitably used in a food providing method described as follows. In other words, these films are suitably used to provide food by using the film color as a mark. These films are described in more detail as follows, and the description is common to the red film and the yellow film unless otherwise noted.

The thermoplastic resin may be a polyester-based resin such as polyethylene terephthalate, polyethylene naphthalate, and polybutylene terephthalate; a polyamide-based resin such as 6-nylon, 6,6-nylon, and 12-nylon; a polystyrene-based resin such as a butadiene-styrene copolymer, an acrylonitrile-styrene copolymer, a polystyrene, a styrene-butadiene-styrene copolymer, a styrene-isoprene-styrene copolymer, and a styrene-acrylate copolymer; a polyolefin-based resin such as a polyethylene, a polypropylene, and a saponified ethylene-vinyl acetate copolymer; a poly vinyl chloride-based resin such as vinyl chloride; or a polyvinylidene chloride-based resin such as polyvinylidene chloride. The thermoplastic resin is preferably a polyvinyl chloride-base resin, a polyvinylidene chloride-based resin or a polyolefin-based resin from the perspective of excellent handling properties, more preferably, a polyvinyl chloride-based resin, a polyvinylidene chloride-based resin or a polyethylene-based resin.

As the polyvinyl chloride-based resin, a polyvinyl chloride-based resin having an average polymerization degree of 700 to 1300 is preferred from the perspective of excellent film formability, heat resistance and fluidity. The average polymerization degree in the present specification means the average polymerization degree measured in accordance with JIS K6720-2.

The polyvinyl chloride-based resin may be a vinyl chloride homopolymer (polyvinyl chloride resin) from the perspective of excellent mechanical properties, or may be a copolymer of vinyl chloride and another monomer polymerizable therewith for the purpose of imparting other characteristics. The copolymers may be a graft copolymer, a block copolymer or a random copolymer. Examples of the other monomer include an olefin such as ethylene, propylene, and butane; a vinyl ester of a saturated acid such as vinyl acetate and vinyl laurate; an alkyl ester of unsaturated acids such as methyl acrylate and methyl methacrylate; an alkyl vinyl ether such as lauryl vinyl ether; maleic acid, acrylonitrile, styrene, methyl styrene and vinylidene fluoride. When the polyvinyl chloride-based resin is a copolymer, the content of vinyl chloride units in the copolymer may be 10% by mass or more, and is preferably 30% by mass or more, more preferably 50% by mass or more, based on the total amount of monomer units, from the perspective of excellent mechanical properties. The upper limit of the content of vinyl chloride units in the copolymer is not particularly limited, and may be, for example, 99% by mass or less based on the total amount of the monomer units.

The polyvinyl chloride-based resin may be, for example, a polymer blend with a three-dimensional polymer of acrylonitrile-butadiene-styrene, a product post-processed with alcohol or the like, or a product post-processed with a chlorine-containing compound. In these cases, the content of vinyl chloride units in the polyvinyl chloride-based resin may be 10% by mass or more based on the total amount of the resin.

The polyvinylidene chloride-based resin may be a vinylidene chloride homopolymer (polyvinylidene chloride

resin), or, for example, a co-polymer containing vinylidene chloride and another monomer copolymerizable with vinylidene chloride as monomer unit. The other monomer may be vinyl chloride, an acrylate of acrylic acid with an alcohol having 1 to 8 carbon atoms, a methacrylate of methacrylic acid with an alcohol having 1 to 8 carbon atoms, a vinyl ester of an aliphatic carboxylic acid, an unsaturated aliphatic carboxylic acid, olefins and a vinyl ether. Note that a copolymer of vinylidene chloride and vinyl chloride is assumed to belong to polyvinylidene chloride-based resins.

The content of vinylidene chloride units in a polyvinylidene chloride-based resin may be, for example, 60% by mass or more, 70% by mass or more, or 80% by mass or more, based on the total amount of the monomer units, from the perspective of formability and heat resistance of the film. The upper limit of the content of vinylidene chloride units in a polyvinylidene chloride-based resin is not particularly limited, and may be, for example, 99% by mass or less based on the total amount of the monomer units. The content of vinylidene chloride units can be measured by a nuclear magnetic resonance (NMR) apparatus.

The weight average molecular weight of a polyvinylidene chloride-based resin may be, for example, 40000 to 180000, 60000 to 160000, or 80000 to 140000. The weight average molecular weight of a polyvinylidene chloride-based resin can be measured by GPC method, using a polystyrene having a known molecular weight as standard substance.

The conditions of GPC method for measurement of the weight average molecular weight of a polyvinylidene chloride-based resin are as follows. As the measurement apparatus, a Gel Chromatograph Alliance GPC2000 manufactured by Waters Corporation is used. A polyvinylidene chloride-based resin is dissolved in tetrahydrofuran to a content of 0.5% by mass to be used as a sample.

Column: TSKgel GMHHR-H (S) HT 30 cm × 2, TSKgel GMH6-HTL 30 cm × 2, manufactured by Tosoh Corporation
Mobile phase: tetrahydrofuran
Detector: differential refractometer
Flow rate: 1.0 mL/min
Column temperature: 20°C
Injection volume: 500 μL

Examples of the polyolefin-based resin include polyethylene-based resins, and the polyethylene-based resins may be a low density polyethylene, a linear low density polyethylene, a linear ultra low density polyethylene, a medium density polyethylene, a high density polyethylene, and a copolymer having monomer units of ethylene or the like. Specifically, the polyethylene-based resin may be a copolymer of ethylene and one or more selected from α-olefins having 3 to 10 carbon atoms such as propylene, 1-butene, 1-pentene, 1-hexene, 4-methyl-1-pentene, 1-heptene, and 1-octene; vinyl esters such as vinyl acetate and vinyl propionate, unsaturated carboxylic acid esters such as methyl acrylate, ethyl acrylate, methyl methacrylate and ethyl methacrylate; and unsaturated compounds such as conjugated dienes and non-conjugated dienes. The content of ethylene units in the polyethylene-based resin may be 50% by mass or more based on the total amount of monomer units.

The content of the thermoplastic resin may be 70% by mass or more, or 75% by mass or more, and 85% by mass or less, or 80% by mass or less, based on the total amount of the film, from the perspective of excellent productivity.

The red colorant is, for example, a colorant having a maximum absorption wavelength at 500 to 599 nm in the visible light region (wavelength: whole region of 380 to 750 nm). From the perspective of excellent visibility, the absorbance at the maximum absorption wavelength in the visible light region of the red colorant is preferably 2 times or more, more preferably 3 times or more, the absorbance at a wavelength of 650 nm. Specifically, the red colorant may be quinacridone red, quinacridone scarlet, dimethyl quinacridone, a mixture of 4-nitroaniline and 2-naphthol, a mixture of 2-nitro-4-toluidine and 2-naphthol, a mixture of 2-nitro-p-toluidine and 3-oxy-3'-nitronaphthalide, a mixture of o-anisidine and 2-naphthol, a mixture of 2,4,5-trichloroaniline and 3-oxy-2-naphtho-o- toluidide, a mixture of 4-chloro-o-toluidine and 4'-chloro-3-hydroxy-2-naphtho-o-toluidide, a mixture of 2,5-dichloroaniline and 3-oxy-2-naphtho-p-toluidide, a mixture of 2,5-dichloroaniline and 3-oxy-2-naphtho-o-anisidide, a mixture of N,N'-diethyl-4-methoxymethanylamide and 5'-chloro-3-hydroxy-2',4'-dimethoxy-2-naphthoanilide, a mixture of 4-nitro-o-anisidine and 3-oxy-N-1-naphthyl-2-naphthoamide, a mixture of 1-naphthylamine and 1-naphthol-5-sulfonic acid (calcium salt), a mixture of 2-amino-naphthalene-1-sulfonic acid and 2-naphthol (calcium salt), a mixture of 6-amino-m-toluene sulfonic acid and 3-oxy-2-naphthoic acid (calcium salt), and a mixture of 2-amino-5-chloro-p-toluene sulfonic acid and 3-oxy-2-naphthoic acid (calcium salt), a mixture of 6-amino-4-chloro-m-toluenesulfonic acid and 3-oxy-2-naphthoic acid (calcium salt), a mixture of 2-aminonaphthalene-1-sulfonic acid and 3-oxy-2-naphthoic acid (calcium salt), a mixture of 3,3'-dichlorobenzidine and 3-carboxy-1-phenyl-5-pyrazolone, a mixture of o-dianisidine and 3-methyl-1-p-tolyl-5-pyrazolone, 1,2'-dioxyanthraquinone (calcium lake, iron lake, or aluminum lake), 4,4'-dimethyl-6,6'-dichloro-2,2,-bis-thionaphthene indigo, 4,4'-dimethyl-6,5',7'-trichloro-2,2'-bis thionaphthene indigo, a mixture of naphthionic acid and R acid (aluminum salt), and erythrosine (aluminum salt). These red colorants may be used alone or in combination of two or more thereof. The red colorant is preferably a red pigment from the perspective of further improvement in the strength, dispersibility and resistance to solvent.

The content of the red colorant may be 0.5% by mass or more, or 0.6% by mass or more, and 2.0% by mass or less, or 1.9% by mass or less, based on the total amount of the red film, from the perspective of excellent coloring properties and productivity.

The yellow colorant is, for example, a colorant having a maximum absorption wavelength at 380 to 499 nm in the visible light region (wavelength: whole region of 380 to 750 nm). From the perspective of excellent visibility, the absorbance at the maximum absorption wavelength in the visible light region of the yellow colorant is preferably 2 times or more, more preferably 3 times or more, the absorbance at a wavelength of 600 nm. Specifically, the yellow colorant may be a mixture of o-nitroaniline and acetoacetanilide, a mixture of p-nitroaniline and acetoacetanilide, a mixture of 4-chloro-2-nitroaniline and acetoacetanilide, a mixture of o-nitro-p-toluidine and acetoacetanilide, a mixture of p-chloro-o-nitroaniline and o-chloro-acetoacetanilide, a mixture of 4-chloro-2-nitroaniline and acetoaceto-m-xylidide, a mixture of sulfanilic acid and 3-carboxy-1-(p-sulfophenyl)-5- pyrazolone, a mixture of sulfanilic acid and 3-carboxy-1-(p-sulfophenyl)-5-pyrazolone (aluminum lake), a mixture of 3,3'-dichlorobenzidine and acetoaceto-o-toluidide, a mixture of 3,3'-dichlorobenzidine and acetoaceto-p-toluidide, a mixture of 3,3'-dichlorobenzidine and acetoaceto-m-xylidide, a mixture of 1-amino-5-benzamide-anthraquinone and oxylal chloride, N,N-bis-(1-anthraquinolyl)-isophthalic amide, a mixture of 3,3'-dichlorobenzidine and 4-chloro-2,5-dimethoxy-acetoacetanilide, a mixture of sulfanilic acid and 2-naphthol-6-sodium sulfonate, a mixture of 3,3'-dichlorobenzidine and 3-methyl-1-phenyl-5-pyrazolone, a mixture of o-dianisidine and acetoacetanilide, 4,11-bis(benzoylamino)-16H-dinaphtho[2,3 -a: 2',3'-i]carbazole-5,10,15,17-tetraone, and a mixture of naphthalene tetra-carboxylic acid and 1,2-diaminobenzene. These yellow colorants are used alone or in combination of two or more thereof. The yellow colorant is preferably a yellow pigment, from the perspective of further improvement in strength, dispersibility and resistance to solvent.

The content of the yellow colorant may be 0.5% by mass or more, or 0.6% by mass or more, and 2.0% by mass or less, or 1.9% by mass or less, based on the total amount of the yellow film, from the perspective of coloring properties and productivity.

Preferably, the film further contains a polyester-based plasticizer, from the perspective of suppression of elution of additives in the film into food. Note that polyglycerol fatty acid esters described below are not included in the polyester-based plasticizer.

The number average molecular weight of the polyester-based plasticizer is preferably 1000 to 1800, 1200 to 1800, 1300 to 1800, 1400 to 1800, or 1500 to 1800, from the perspective of further suppression of the elution of additives into food. The number average molecular weight in the present specification is a number average molecular weight in terms of polystyrene measured by GPC.

The conditions of GPC in measurement of the weight average molecular weight of a polyester-based plasticizer are as follows. As the measurement apparatus, a Gel Chromatograph Alliance GPC2000 manufactured by Waters Corporation is used. After 30 mg of a sample is completely dissolved in 20 mL of o-dichlorobenzene at 145°C, the solution is filtered through a sintered filter having a pore diameter of 0.45 μm to make a sample solution. Other conditions are as follows.

Column: TSKgel GMHHR-H (S) HT 30 cm × 2, TSKgel GMH6-HTL 30 cm × 2, manufactured by Tosoh Corporation
Mobile phase: o-dichlorobenzene
Detector: differential refractometer
Flow rate: 1.0 mL/min
Column temperature: 140°C
Injection volume: 500 μL

Examples of the polyester-based plasticizers include aliphatic polybasic acid-based polyester plasticizers. The aliphatic polybasic acid-based polyester plasticizer may be, for example, a polyester resin derived from an aliphatic polybasic acid such as adipic acid and sebacic acid and a polyalcohol such as ethylene glycol, propylene glycol and butanediol. Specific examples of the aliphatic polybasic acid-based polyester plasticizer include poly(ethylene glycol/adipic acid)ester, poly(1,3-butanediol/adipic acid)ester, poly(1,4-butanediol/adipic acid)ester, and poly(propylene glycol/sebacic acid)ester. These polyester-based plasticizers may be used alone or in combination of two or more thereof.

The content of the polyester-based plasticizer in the film is preferably 6.5% by mass or more, more preferably 7.0% by mass or more, still more preferably 8.0% by mass or more, particularly preferably 10.0% by mass or more, based on the total amount of the film, from the perspective of further suppression of the elution of additives into food. The content of the polyester-based plasticizer in the film is preferably 12.5% by mass or less, more preferably 12.0% by mass or less, based on the total amount of the film, from the perspective of excellent film formability and productivity. The content of the polyester-based plasticizer in the film is preferably 6.5 to 12.5% by mass, 6.5 to 12.0% by mass, 7.0 to 12.5% by mass, 7.0 to 12.0% by mass, 8.0 to 12.5% by mass, 10.0 to 12.5% by mass, or 10.0 to 12.0% by mass, based on the total amount of the film, from the perspective of further suppression of the elution of additives into food, and better film formability and productivity.

Preferably, the film further contains a polyglycerol fatty acid ester from the perspective of further improvement in the dispersibility of a colorant in the film. Note that the polyglycerol fatty acid ester is a compound not corresponding to the polyester-based plasticizer described above. The polyglycerol fatty acid ester is, for example, a compound represented by the following formula (1).

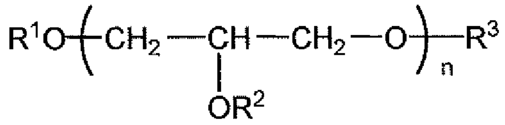

(1)

In the formula (1), $R^1$, $R^2$ and $R^3$ each independently represent a hydrogen atom or a fatty acid residue (alkyl carbonyl group), and at least one of $R^1$, $R^2$ and $R^3$ represents a fatty acid residue (alkyl carbonyl group). A part of the fatty acid residue (alkyl carbonyl group) may be substituted with a hydroxyl group or the like. Here, n represents an integer of 3 or more. A plurality of $R^2$'s may be the same or different from each other.

The number of carbon atoms in the fatty acid residues constituting a polyglycerol fatty acid ester may be, for example, 8 to 24, independently from each other. The fatty acid residues constituting a polyglycerol fatty acid ester may be a saturated fatty acid or an unsaturated fatty acid. Examples of the saturated fatty acid of the fatty acid residues constituting a polyglycerol fatty acid ester include caprylic acid, pelargonic acid, capric acid, undecylic acid, lauric acid, tridecylic acid, myristic acid, pentadecyl acid, palmitic acid, margaric acid, stearic acid, nonadecylic acid, arachidic acid, heneicosylic acid, behenic acid, tricosylic acid and lignoceric acid. Examples of the unsaturated fatty acid of the fatty acid residues constituting the polyglycerol fatty acid ester include α-linoienic acid, stearidonic acid, eicosapentaenoic acid, docosapentaenoic acid, docosahexaenoic acid, linoleic acid, γ-linolenic acid, dihomo-γ-linolenic acid, arachidonic acid, docosapentaenoic acid, palmitoleic acid, vaccenic acid, paullinic acid, oleic acid, elaidic acid, erucic acid and nervonic acid. A part of these saturated fatty acids and unsaturated fatty acids may be substituted with a hydroxyl group. Examples of the compound of fatty acid partly substituted with a hydroxyl group, include ricinoleic acid, linoleic acid, linolenic acid, clupanodonic acid, and eleostearic acid.

Here, n may be an integer of 3 to 20. The polyglycerol fatty acid ester may be a mixture of two or more polyglycerol fatty acid esters having a different n from each other.

The content of the polyglycerol fatty acid ester in the film is preferably 0.5% by mass or more, more preferably 1.0% by mass or more, still more preferably 1.5% by mass or more, based on the total amount of the film, from the perspective of better dispersibility of a colorant. The content of the polyglycerol fatty acid ester in the film is preferably 3.5% by mass or less, more preferably 2.5% by mass or less, still more preferably 2.0% by mass or less, based on the total amount of the film, from the perspective of better dispersibility of a colorant. The content of the polyglycerol fatty acid ester in the film is preferably 0.5 to 3.5% by mass, 0.5 to 2.5% by mass, 0.5 to 2.0% by mass, 1.0 to 3.5% by mass, 1.0 to 2.5% by mass, 1.0 to 2.0% by mass, 1.5 to 3.5% by mass, 1.5 to 2.5% by mass, or 1.5 to 2.0% by mass, based on the total amount of the film, from the perspective of better dispersibility of a colorant.

The film may further contain a plasticizer other than the polyester-based plasticizers described above. Examples of the plasticizer include aliphatic dibasic acid esters such as di-i-butyl adipate, di-n-butyl adipate and dioctyl adipate; hydroxy polycarboxylic acid esters such as acetyl tributyl citrate, acetyl triethyl citrate, and acetyl tri-2-ethylhexyl citrate; phthalic acid esters such as di-n-butyl phthalate, dihexyl phthalate, dioctyl phthalate, and butyl benzyl phthalate; glycol esters such as pentaerythritol ester and diethylene glycol benzoate; phosphoric acid esters such as tricresyl phosphate, and triphenyl phosphate; and epoxidized oils such as epoxidized soybean oil and epoxidized linseed oil. These plasticizers may be used alone or in combination.

The film may further contain a stabilizer. Examples of the stabilizer include organotin compound-based, barium-zinc-based, calcium-zinc-based, and lead-based stabilizers.

The film may further contain other components. Examples of the other components include heat stabilizers, light stabilizers, anti-fogging agents other than polyglycerol fatty acid esters, lubricants, fillers, anti-plate-out agents, antioxidants, mold release agents, viscosity reducing agents, surfactants, colorants other than the colorants described above, fluorescent agents, surface treating agents, crosslinking agents, processing aids, adhesives, antistatic agents, ultraviolet absorbers, and antiblocking agents.

The film may consist of a single layer containing the thermoplastic resin and the red or yellow colorant or a plurality of layers. When the film consists of a plurality of layers, the film may, for example, comprise a first surface layer, an intermediate layer and a second surface layer in this order. In this case, for example, the first and second surface layers may contain the thermoplastic resin and an additive added on an as needed basis, and the intermediate layer may contain the thermoplastic resin, the red or yellow colorant, and an additive added on an as needed basis. The film may, for example, further comprise an adhesive layer containing an acid-modified polyolefin resin or the like to improve the adhesion between the individual layers, and a heat-resistant layer containing a polyamide-based resin to improve the heat resistance of the film.

The thickness of the film may be preferably 5 μm or more, more preferably 6 μm or more, from the perspective of efficiently shielding food from external air, and preferably 25 μm or less, more preferably 12 μm or less, from the perspective of excellent handling properties.

The total luminous transmittance of the film is preferably 75 to 90%, more preferably 80 to 90%, from the perspective of excellent visibility. Through measurement of the quantity of incident light and the total quantity of transmitted

light in accordance with JIS K7361-1, the total luminous transmittance can be calculated as follows:

$$\text{Total luminous transmittance} = (\text{Total quantity of transmitted light})/(\text{Quantity of incident light}) \times 100.$$

The amount of the components in the film eluted into a food pseudo-solvent is preferably 30 μg/mL or less. The amount eluted means the amount of film components eluted into a food pseudo-solvent measured in accordance with the test method for evaporation residue described in "Regulations and standards of foods, additives, etc." (Ministry of Health and Welfare Notification No. 20 in 1982). The food pseudo-solvent may be, for example, heptane. In this case, the amount eluted into heptane can be specifically measured by a similar method as in Examples. The food pseudo-solvent may be isooctane, which is a solvent described in an EU standard EN1186-14: 2002.

The film is produced, for example, by preparing a composition through mixing a thermoplastic resin, a red or yellow colorant, and the above-described various components on an as needed basis with a mixer such as a V-type blender, a ribbon blender, a Henschel mixer and a super mixer, and further kneading the same with a kneading machine such as a mixing roll, a Banbury mixer and a kneader on an as needed basis, and then, for example, by extrusion molding the composition. Specifically, the composition is supplied to the hopper of an extruder to obtain the film of interest by an inflation method, a T-die method or the like. In general, the film is wound while being made, and the wound film is rewound (rolled) to each desired length of 20 m, 50 m, or the like, and packed into a box to make a product. In other words, the film in the present embodiment may be in the form of film rolled around a core material, or may be in the form of film accommodated in a box.

Specifically, as shown in Figure 1, a film-accommodating product 1 has a food wrapping film 2, a core material 3 having the food wrapping film rolled thereon, and a box 4 for accommodating the food wrapping film 2 and the core material 3. The box 4 may be provided with a blade portion 5 for cutting the food wrapping film 2. The material of the core material 3 and the box 4 is not specifically limited. From the perspective of easy identification of the film color from the outside, at least a part of the box 4 is preferably transparent, or bored to an extent not to damage the function as a box, so that the internal part can be visible from the outside.

When the film consists of a plurality of layers, raw materials to constitute the layers can be fed into separate extruders respectively and melt-extruded, and the layers are coextruded to be laminated by an inflation method, a T-die method or the like, to produce the film. On this occasion, it is preferable that the melt product extruded from the T-die be directly collected while being quenched with a casting roll or the like to form the film.

Depending on the purpose such as reduction in the thermal shrinkage ratio and natural shrinkage ratio, and suppression of occurrence of width shrinkage, the film thus produced may be subjected to a heat treatment such as longitudinal stretching between heated rollers, various types of heat setting, and aging; or for the purpose of improving anti-fogging properties, antistatic properties, adhesive properties or the like, the film may be subjected to corona treatment, aging treatment, surface treatment such as printing and coating, or surface processing.

Subsequently, the food providing method of the present embodiment is described. The food providing method is a method of providing two or more foods to at least two groups. In the method, for example when a first food comprising a first allergen and a second food comprising a second allergen are present, the first food is provided to the first group constituted by persons having no allergic symptoms to the first allergen, whereas the second food is provided to the second group constituted by persons having no allergic symptoms to the second allergen. In the above instance, occurrence of accidentally providing allergen to a person having allergic symptoms to the first or second allergen can be suppressed. In other words, the food providing method is a food service method, or a method for suppressing or preventing a food from being incorrectly provided.

In the method, on the occasion of providing food as described above, a step of wrapping a first food with a first film for sorting in order to provide the first food to a first group (first step), and a step of wrapping a second food with a second film for sorting in order to provide the second food to a second group (second step) are performed.

Here, when food is accommodated in a container, wrapping food with the film means not only wrapping food directly with the film, but also wrapping food and the container together with the film. Further, without any restriction on the sequence for performing the first step and the second step, the second step may be performed after the first step, the first step may be performed after the second step, the first step and the second step may be performed in parallel, or the first step and the second step may be randomly repeated.

The first film for use in the first step and the second film for use in the second step may be colored films having different colors from each other. In other words, the maximum absorption wavelength in the visible light region (whole region of 380 to 750 nm) is different between the first film and the second film. The difference in the maximum absorption wavelength in the visible light region between the two may be, for example, 50 nm or more, 100 nm or more, or 150 nm or more. The difference in the maximum absorption wavelength in the visible light region between the two is preferably

100 nm or more, from the perspective of more efficient discrimination between the two. Alternatively, one of the first film and the second film may be a colored film, and another may be a colorless film. Note that the colored film refers to the film containing a colorant, whereas the colorless film refers to a film not containing a colorant.

When colored films are used as the first film and the second film, the first film and the second film are each selected from, for example, a red film, a yellow film, a blue film, a green film, a violet film and the like, having different colors from each other. As the red film and the yellow film, the above-described red film containing a thermoplastic resin and a red colorant and the above-described yellow film containing a thermoplastic resin and a yellow colorant are suitably used, respectively.

The blue film contains, for example, a thermoplastic resin and a blue colorant. The green film contains, for example, a thermoplastic resin and a green colorant. The violet film contains, for example, a thermoplastic resin and a violet colorant. The thermoplastic resin for use in these films may be the same as in the red film and the yellow film.

The blue colorant is, for example, a colorant having a maximum absorption wavelength at 600 to 750 nm in the visible light region (wavelength: whole region of 380 to 750 nm). The absorbance at the maximum absorption wavelength in the visible light region of the blue colorant is preferably 2 times or more, more preferably 3 times or more, the absorbance at a wavelength of 470 nm. Specifically, the blue colorant may be copper phthalocyanine (copper phthalocyanine blue), iron(III) hexacyanoferrate(II), a mixture of cobaltous oxide and aluminum oxide, indigo or ultramarine. These blue colorants may be used alone or in combination of two or more thereof. The content of the blue colorant may be 0.5% by mass or more and 2.0% by mass or less, based on the total amount of the blue film. The blue film is preferably a blue pigment from the perspective of further improvement in the strength, dispersibility and resistance to solvent.

The green colorant may be an iron $\alpha$-nitroso-$\beta$-naphthol complex, copper 4-nitrobenzene azo-2-naphthol complex, octachloro copper phthalocyanine, polychloro copper phthalocyanine, or the like. These green colorants may be used alone or in combination of two or more thereof. The content of the green colorant may be 0.5% by mass or more, or 0.6% by mass or more, and 2.0% by mass or less, or 1.9% by mass or less, from the perspective of coloring properties and productivity.

The violet colorant may be 6,15-dibromo-isoviolanthrone, 5,5'-dichloro-4,4,7,7'-tetramethyl-2,2'-bis(thionaphthene indigo), dioxazine violet, quinacridone violet, or the like. These purple colorants are used alone or in combination of two or more thereof. The content of the purple colorant may be 0.5% by mass or more, or 0.6% by mass or more, and 2.0% by mass or less, or 1.9% by mass or less, based on the total amount of the violet film, from the perspective of excellent coloring properties and productivity.

In an embodiment, preferably the first film and the second film have warm colors. Use of the film having a warm color can visually promote appetite. In the present specification, having a warm color means that a maximum absorption wavelength is present in a region of less than 600 nm in the visible light region (wavelength: whole region of 380 to 750 nm). In an embodiment, preferably the above-described red film containing a thermoplastic resin and a red colorant is used as the first film, and the above-described yellow film containing a thermoplastic resin and a yellow colorant is used as the second film. When a red film and a yellow film are used, the red color and the yellow color are colors associated with danger in general as well as warm colors, and thus for example when the first group provided is a group prohibited to be served to specific persons, operators tend to intuitively perceive the matter.

In the food providing method, subsequent to the first step and the second step, a food service step for serving the first food and the second food into which the foods have been sorted in the first step and the second step to the first group and the second group, respectively, is performed. In the food service step, the first food may be served in the state of being wrapped with the first film to the first group, or may be served in a state in which the first film is peeled off (removed) to the first group. In the same way, the second food may be served in the state of being wrapped with the second film to the second group, or may be served in a state in which the second film is peeled off (removed) to the second group.

In the method described above, depending on the purpose of food provision, foods are wrapped with a first film or a second film having different colors from each other, to be sorted and thereby provided to at least two groups. Accordingly, the foods can be easily sorted and provided, and the group to which each food belongs can be visually identified easily after provision.

The food providing method has no complicated steps and needs no complicated facilities or equipment, and food provision can be easily achieved in a conventional cooking step of wrapping food with a film. In particular, the method is overwhelmingly excellent as a method for reducing time from plating meal to provision (food service), compared with conventional methods. Furthermore, since foods are provided based on the difference in the color of an entire film, the occurrences of overlooking or mistaking the group provided are fewer than those in placing a mark on a part of the film. The food providing method is very simple, allowing a step of identifying the group of individual foods to be also omitted.

The food providing method in another embodiment may be a food providing method for providing foods to at least three groups corresponding to the type of three or more types of food. In the method, a step of wrapping a third food with a third film and providing the food to a third group (third step) is further performed. In this case, for example,

the third group is constituted by persons having allergic symptoms to the first and second allergens.

In the embodiment, for example, the above-described red film containing a thermoplastic resin and a red colorant is used as the first film, the above-described yellow film containing a thermoplastic resin and a yellow colorant is used as the second film, and above-described blue film containing a thermoplastic resin and a blue colorant is used as the third film. Further, without any restriction on the sequence for performing the first to third steps, the first to third steps may be performed in parallel, or the first to third steps may be randomly repeated.

The number of types of food provided and the number of groups to whom food is provided are appropriately determined depending on the purpose, and are, of course, not limited to the embodiment described above. For example, three types of food may be provided to two groups, or five types of food may be provided to three groups. Note that the case where "the type of food is different" includes not only the case where materials are different, but also the case where the purposes for provision are different.

Although the above embodiments have been described with reference to cases where the food contains an allergen, on the occasion of food provision, the food may be provided according to other criteria (purposes). Specific examples thereof include provision corresponding to genetically modified agricultural products and non-genetically modified agricultural products, provision corresponding to domestically produced food and foreign-produced food, provision corresponding to animal food and vegetable food, provision corresponding to flavor in the case where the flavor of food is varied with spices, seasonings, or the like, provision corresponding to the purpose for checking the number of large quantities of food through division of the food into every predetermined number, and provision corresponding to a predetermined initiation time of aging for food requiring aging for a predetermined time.

Note that "film" generally refers to a thin and flat product having an extremely small thickness relative to the length and the width, of which maximum thickness is limited to any value, and is supplied in roll form (refer to Japanese Industrial Standard JIS K6900 as needed), whereas "sheet" generally refers to a thin and flat product having a small thickness relative to the length and the width, according to the definition in JIS. However, the boundary between a sheet and a film is not clear, and it is not required to literally distinguish the two in the present embodiment. It is therefore assumed that "film" referred to in the present specification includes "sheet", and "sheet" referred to in the present specification includes "film". Further, "film" is a concept including a wrap film in particular, in the definition described above.

## Examples

The present invention is more specifically described with reference to Examples as follows, though the present invention is not limited to Examples.

(1) Preparation of food wrapping film

A thermoplastic resin, a colorant and various additives shown in Tables 1 to 9 were fed into a super mixer. While stirring, the material temperature was then raised from normal temperature to 130°C. After mixing, the mixture was taken out when cooled to 70°C to prepare a resin composition. Each resin composition was extruded at a resin temperature of 200°C with a single screw extruder (L/D) with a diameter of 40 mm, equipped with a T-die (width: 350 mm, gap: 0.4 mm) to prepare a film having a thickness of 8 μm. Note that the numerical values in the tables are values in terms of solid content, representing "% by mass".

Thermoplastic resin a1: a polyvinyl chloride-based resin (manufactured by TAIYO VINYL CORPORATION, "TH-1000", average polymerization degree: 1000)

Red colorant b1: quinacridone red (manufactured by Dainichiseika Color & Chemicals Mfg. Co., Ltd., "NX-032 Red", maximum absorption wavelength: 510 nm)

Yellow colorant c1: a mixture of 3,3'-dichloro-benzidine and 4-chloro-2,5-dimethoxy-acetoacetanilide (manufactured by Dainichiseika Color & Chemicals Mfg. Co., Ltd., "NX-012 Yellow", a maximum absorption wavelength: 420 nm)

Additives d1: a polyester-based plasticizer (manufactured by ADEKA Corporation, "PN-150", number average molecular weight: 1000, adipic acid-based polyester)

Additives d2: a polyester-based plasticizer (manufactured by J-PLUS Co., Ltd., "D623", number average molecular weight: 1800, adipic acid-based polyester)

Additives d3: a polyester-based plasticizer (manufactured by J-PLUS Co., Ltd., "D620N", number average molecular weight: 800, adipic acid-based polyester)

Additives d4: a polyester-based plasticizer (manufactured by ADEKA Corporation, "P-200", number average molecular weight: 2000, adipic acid-based polyester)

Additives e1: a polyglycerol fatty acid ester (manufactured by RIKEN VITAMIN Co., Ltd., "POEM PR-300", polyglycerol polyricinoleate, a mixture of compounds represented by formula (1), wherein n is 4 to 6)

Additives e2: a diglycerol fatty acid ester (manufactured by RIKEN VITAMIN Co., Ltd., "O-71-DE", diglycerol oleate)

Additives e3: a glycerol fatty acid ester (manufactured by RIKEN VITAMIN Co., Ltd., "XO-100", glycerol monooleate)

Additives e4: a sorbitan fatty acid ester (manufactured by RIKEN VITAMIN Co., Ltd., "L-250A", sorbitan laurate)
Additives f1: dioctyl adipate (manufactured by New Japan Chemical Co., Ltd., "SANSO CIZER DOA")
Additives f2: an epoxidized soybean oil (manufactured by Sanwa Synthetic Chemical Industry Co, Ltd., "CHEMICIZER SE-100")
Additives f3: a Ca/Zn-based stabilizer (manufactured by ADEKA Corporation, "SC-308E")
Blue colorant g1: copper phthalocyanine (manufactured by Dainichiseika Color & Chemicals Mfg. Co., Ltd., "NX-053 BLUE", maximum absorption wavelength: 620 nm)

(2) Evaluation of food wrapping film

For each film obtained, the amount of heptane eluted, the amount of isooctane eluted, film formability, productivity and dispersibility were measured by the following procedure. The results are shown in Tables 1 to 9.

(Amount of heptane eluted)

A 5 cm × 10 cm sample cut out from a film to have a total surface area at front and back of 100 $cm^2$ was immersed in 2 mL of heptane per $cm^2$ of the surface area of the sample at a temperature of 25°C for 1 hour. Subsequently, the test solution after removal of the sample was evaporated to dryness at 105°C, and allowed to cool. The mass of the solid content after cooling was measured to determine the amount of components eluted into heptane from the film through calculation according to the following equation. For a polyvinyl chloride-based resin, an amount of 150 μg/mL or less can be deemed to be good, and an amount of 30 μg/mL or less can be deemed to be very good.

$$\text{Evaporation residue } (\mu g/mL) = \text{mass of solid content } (\mu g)/\text{amount of test solution collected } (mL)$$

(Amount of isooctane eluted)

A 5 cm × 10 cm sample cut out from a film to have a total surface area at front and back of 100 $cm^2$ was immersed in 2 mL of an isooctane solution per $cm^2$ of the surface area of the sample at a temperature of 25°C for 30 minutes. Subsequently, the test solution after removal of the sample was evaporated to dryness at 105°C, and allowed to cool. The mass of the solid content after cooling was measured to determine the amount of components eluted into isooctane from the film through calculation according to the following equation. For a polyvinyl chloride-based resin, an amount of 90 μg/mL or less can be deemed to be good, and an amount of 30 μg/mL or less can be deemed to be very good.

$$\text{Evaporation residue } (\mu g/mL) = \text{mass of solid content } (\mu g)/\text{amount of test solution collected } (mL)$$

(Evaluation of formability)

With a T-die extruder, each resin composition was extruded to form a film at a resin temperature of 200°C, and the appearance of the resulting film was observed to evaluate the formability. The evaluation criteria are as follows. Note that samples rated as A or B can be deemed to have excellent formability.

A: A film having an approximately uniform thickness was obtained, and no burn marks occurred in extrusion for 24 hours.
B: Slightly uneven thickness of a film was observed, and burn marks occurred in extrusion for 24 hours.
C: Severe unevenness in the thickness of a film was observed, and burn marks occurred in extrusion for 8 hours.

(Evaluation of productivity)

With a T-die extruder, each resin composition was extruded to form a film at a resin temperature of 200°C, and the number of occurrences of production trouble in film forming (hole opening, film breakage and slit defect) per 24 hours was counted to evaluate the productivity. The evaluation criteria are as follows. Note that samples rated as A or B can be deemed to have excellent productivity.

A: The number of occurrences of production trouble was 0 to 2.
B: The number of occurrences of production trouble was 3 to 4.
C: The number of occurrences of production trouble was 5 or more.

(Evaluation of dispersibility)

Each resulting film was cut into 20 cm × 20 cm to make a test piece. The test piece was visually observed to inspect the presence or absence of color unevenness to evaluate the dispersibility of a red colorant or a yellow colorant. The evaluation criteria are as follows. Note that samples rated as A, B or C can be deemed to have excellent dispersibility.

A: No color unevenness was observed in a test piece.

B: Color unevenness was observed at one spot in a test piece.

C: Color unevenness was observed at two to three spots in a test piece.

D: Color unevenness was observed in more than four spots in the test piece.

[Table 1]

| | | Example 1 | Example 2 | Example 3 | Example 4 | Example 5 |
|---|---|---|---|---|---|---|
| Composition (% by mass) | a1 | 74.0 | 74.0 | 73.0 | 73.0 | 75.0 |
| | b1 | 1.0 | 1.0 | 1.0 | 1.0 | 1.0 |
| | d1 | 7.0 | - | 12.0 | - | 4.0 |
| | d2 | - | 7.0 | - | 12.0 | 4.0 |
| | d3 | - | - | - | - | - |
| | d4 | - | - | - | - | - |
| | e2 | 2.0 | 2.0 | 2.0 | 2.0 | 2.0 |
| | f1 | 6.0 | 6.0 | 3.0 | 3.0 | 4.0 |
| | f2 | 9.0 | 9.0 | 8.0 | 8.0 | 9.0 |
| | f3 | 1.0 | 1.0 | 1.0 | 1.0 | 1.0 |
| Amount of heptane eluted (μg/mL) | | 23 | 19 | 20 | 16 | 22 |
| Amount of isooctane eluted (μg/mL) | | 24 | 21 | 21 | 19 | 24 |
| Film formability | | A | A | A | A | A |
| Productivity | | A | A | A | A | A |

[Table 2]

| | | Example 6 | Example 7 | Example 8 | Example 9 | Example 10 |
|---|---|---|---|---|---|---|
| Composition (% by mass) | a1 | 75.0 | 75.0 | 75.0 | 74.0 | 74.0 |
| | b1 | 1.0 | 1.0 | 1.0 | 1.0 | 1,0 |
| | d1 | - | - | - | - | - |
| | d2 | - | - | - | - | - |
| | d3 | - | 10.0 | - | 12.5 | - |
| | d4 | - | - | 10.0 | - | 12.5 |
| | e2 | 2.0 | 2.0 | 2.0 | 2.0 | 2.0 |
| | f1 | 10.0 | - | - | - | - |
| | f2 | 11.0 | 11.0 | 11.0 | 9.5 | 9.5 |
| | f3 | 1.0 | 1.0 | 1.0 | 1.0 | 1.0 |
| Amount of heptane eluted (μg/mL) | | 43 | 34 | 18 | 29 | 15 |
| Amount of isooctane eluted (μg/mL) | | 47 | 37 | 21 | 34 | 19 |
| Film formability | | A | B | C | B | C |
| Productivity | | A | B | C | C | C |

[Table 3]

| | | Example 11 | Example 12 | Example 13 | Example 14 | Example 15 |
|---|---|---|---|---|---|---|
| Composition (% by mass) | a1 | 74.0 | 74.0 | 73.0 | 73.0 | 75.0 |
| | c1 | 1.0 | 1.0 | 1.0 | 1.0 | 1.0 |
| | d1 | 7.0 | - | 12.0 | - | 4.0 |
| | d2 | - | 7.0 | - | 12.0 | 4.0 |
| | d3 | - | - | - | - | - |
| | d4 | - | - | - | - | - |
| | e2 | 2.0 | 2.0 | 2.0 | 2.0 | 2.0 |
| | f1 | 6.0 | 6.0 | 3.0 | 3.0 | 4.0 |
| | t2 | 9.0 | 9.0 | 8.0 | 8.0 | 9.0 |
| | f3 | 1.0 | 1.0 | 1.0 | 1.0 | 1.0 |
| Amount of heptane eluted (μg/mL) | | 22 | 18 | 19 | 18 | 21 |
| Amount of isooctane eluted (μg/mL) | | 23 | 20 | 22 | 19 | 24 |
| Film formability | | A | A | A | A | A |
| Productivity | | A | A | A | A | A |

[Table 4]

| | | Example 16 | Example 17 | Example 18 | Example 19 | Example 20 |
|---|---|---|---|---|---|---|
| Composition (% by mass) | a1 | 75.0 | 75.0 | 75.0 | 74.0 | 74.0 |
| | c1 | 1.0 | 1.0 | 1.0 | 1.0 | 1.0 |
| | d1 | - | - | - | - | - |
| | d2 | - | - | - | - | - |
| | d3 | - | 10.0 | - | 12.5 | - |
| | d4 | - | - | 10.0 | - | 12.5 |
| | e2 | 2.0 | 2.0 | 2.0 | 2.0 | 2.0 |
| | f1 | 10.0 | - | - | - | - |
| | f2 | 11.0 | 11.0 | 11.0 | 9.5 | 9.5 |
| | f3 | 1.0 | 1.0 | 1.0 | 1.0 | 1.0 |
| Amount of heptane eluted (μg/mL) | | 42 | 33 | 20 | 29 | 15 |
| Amount of isooctane eluted (μg/mL) | | 46 | 38 | 21 | 34 | 18 |
| Film formability | | A | B | C | B | C |
| Productivity | | A | B | C | C | C |

[Table 5]

| | | Example 21 | Example 22 | Example 23 | Example 24 |
|---|---|---|---|---|---|
| Composition (% by mass) | a1 | 75.0 | 75.0 | 75.0 | 75.0 |
| | b1 | 1.0 | 1.0 | 1.0 | 1.0 |
| | e1 | 1.5 | 1.0 | 0.4 | 0.4 |
| | e2 | - | 1.0 | - | - |
| | e3 | - | - | 1.6 | - |
| | e4 | - | - | - | 1.6 |
| | f1 | 12.5 | 12.0 | 12.0 | 12.0 |
| | f2 | 9.0 | 9.0 | 9.0 | 9.0 |
| | f3 | 1.0 | 1.0 | 1.0 | 1.0 |
| Dispersibility | | A | B | B | B |

[Table 6]

| | | Example 25 | Example 26 | Example 27 | Example 28 |
|---|---|---|---|---|---|
| Composition (% by mass) | a1 | 75.0 | 75.0 | 77.0 | 77.0 |
| | b1 | 1.0 | 1.0 | 1.0 | 1.0 |
| | e1 | 4.0 | - | - | - |
| | e2 | 4.0 | 0.4 | - | - |
| | e3 | - | 0.4 | 0.6 | - |
| | e4 | - | 0.2 | 0.6 | 2.0 |
| | f1 | 6.0 | 12.0 | 9.8 | 10.0 |
| | f2 | 9.0 | 10.0 | 10.0 | 9.0 |
| | f3 | 1.0 | 1.0 | 1.0 | 1.0 |
| Dispersibility | | C | D | D | D |

[Table 7]

| | | Example 29 | Example 30 | Example 31 | Example 32 |
|---|---|---|---|---|---|
| Composition (% by mass) | a1 | 75.0 | 75.0 | 75.0 | 75.0 |
| | c1 | 1.0 | 1.0 | 1.0 | 1.0 |
| | e1 | 1.5 | 1.0 | 0.4 | 0.4 |
| | e2 | - | 1.0 | - | - |
| | e3 | - | - | 1.6 | - |
| | e4 | - | - | - | 1.6 |
| | f1 | 12.5 | 12.0 | 12.0 | 12.0 |
| | f2 | 9.0 | 9.0 | 9.0 | 9.0 |
| | f3 | 1.0 | 1.0 | 1.0 | 1.0 |
| Dispersibility | | A | B | B | B |

[Table 8]

| | | Example 33 | Example 34 | Example 35 | Example 36 |
|---|---|---|---|---|---|
| Composition (% by mass) | a1 | 75.0 | 75.0 | 77.0 | 77.0 |
| | c1 | 1.0 | 1.0 | 1.0 | 1.0 |
| | e1 | 4.0 | - | - | - |
| | e2 | 4.0 | 0.4 | - | - |
| | e3 | - | 0.4 | 0.6 | - |
| | e4 | - | 0.2 | 0.6 | 2.0 |
| | f1 | 6.0 | 12.0 | 9.8 | 10.0 |
| | f2 | 9.0 | 10.0 | 10.0 | 9.0 |
| | f3 | 1.0 | 1.0 | 1.0 | 1.0 |
| Dispersibility | | C | D | D | D |

[Table 9]

| | | Example 37 | Example 38 | Example 39 | Example 40 | Reference Example 1 | Reference Example 2 |
|---|---|---|---|---|---|---|---|
| Composition (% by mass) | a1 | 74 | 74 | 74 | 74 | 74 | 74 |
| | b1 | 1.0 | 1.0 | 1.0 | 1.0 | - | - |
| | d1 | 7.0 | - | 7.0 | - | 7.0 | 7.0 |
| | d2 | - | 7.0 | - | 7.0 | - | - |
| | e1 | 1.0 | 1.0 | 1.0 | 1.0 | - | - |
| | e2 | 1.0 | 1.0 | 1.0 | 1.0 | 1.0 | 2.0 |
| | f1 | 6.0 | 6.0 | 6.0 | 6.0 | 6.0 | 6.0 |
| | f2 | 9.0 | 9.0 | 9.0 | 9.0 | 9.0 | 9.0 |
| | f3 | 1.0 | 1.0 | 1.0 | 1.0 | 1.0 | 1.0 |
| | g1 | - | - | - | - | 1.0 | - |
| Amount of heptane eluted (μg/mL) | | 21 | 19 | 22 | 18 | 22 | 23 |
| Amount of isooctane eluted (μg/mL) | | 23 | 20 | 23 | 20 | 24 | 23 |
| Film formability | | A | A | A | A | A | A |
| Productivity | | A | A | A | A | A | A |
| Dispersibility | | A | A | A | A | A | A |

Films obtained in Examples 1 to 10, 21 to 28 and 37 to 40 had a red color, and films obtained in Examples 11 to 20 and 29 to 36 had a yellow color. When foods were wrapped with these films, the colors were able to be visually distinguished, and the films were able to be suitably used in the food providing method of the present invention. Furthermore, since the film obtained in Reference Example 1 had blue color and the film obtained in Reference Example 2 was colorless, the films were able to be suitably used in the food providing method of the present invention, in combination with the above-described red film or yellow film.

**Reference Signs List**

1: film-accommodating product, 2: food wrapping film, 3: core material, 4: box, 5: blade portion.

## Claims

**1.** A food wrapping film comprising:

a thermoplastic resin; and
a red colorant.

**2.** The food wrapping film according to claim 1, further comprising a polyester-based plasticizer having a number average molecular weight of 1000 to 1800.

**3.** The food wrapping film according to claim 1 or 2, further comprising a polyglycerol fatty acid ester.

**4.** A food wrapping film comprising:

a thermoplastic resin; and
a yellow colorant.

5. The food wrapping film according to claim 4, further comprising a polyester-based plasticizer having a number average molecular weight of 1000 to 1800.

6. The food wrapping film according to claim 4 or 5, further comprising a polyglycerol fatty acid ester.

7. A film-accommodating product comprising:

   the food wrapping film according to any one of claims 1 to 6;
   a core material having the food wrapping film rolled thereon; and
   a box accommodating the food wrapping film and the core material,
   wherein the box has a blade portion for cutting the food wrapping film.

8. A food providing method for providing two or more types of food to at least two groups, comprising:

   wrapping a first food with a first film for sorting in order to provide the first food to a first group; and
   wrapping a second food with a second film having a color different from that of the first film for sorting in order to provide the second food to a second group.

9. The food providing method according to claim 8, wherein the first film is the food wrapping film according to any one of claims 1 to 3.

10. The food providing method according to claim 8 or 9, wherein the second film is the food wrapping film according to any one of claims 4 to 6.

11. The food providing method according to any one of claims 8 to 10, wherein the first food comprises a first allergen, and the first group is constituted by persons having no allergic symptoms to the first allergen.

12. The food providing method according to any one of claims 8 to 11, wherein the second food comprises a second allergen, and the second group is constituted by persons having no allergic symptoms to the second allergen.

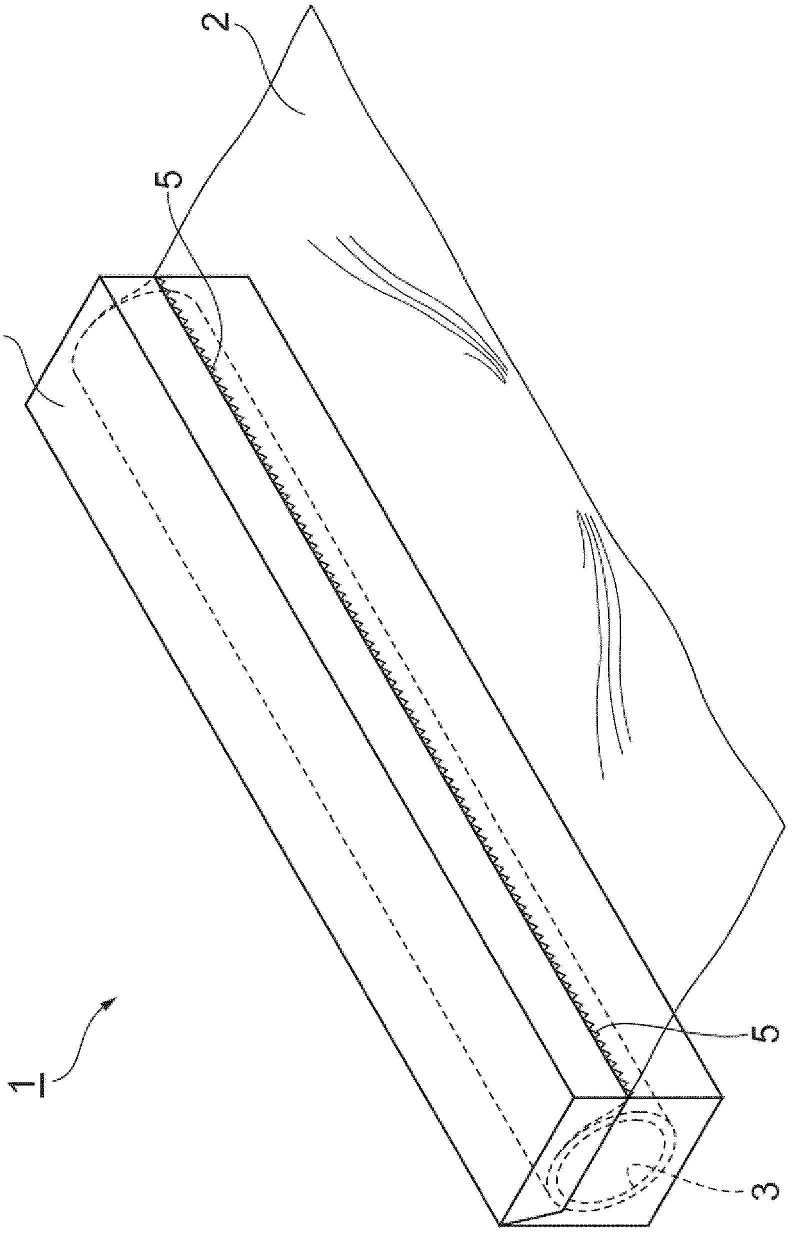


Fig.1

## INTERNATIONAL SEARCH REPORT

International application No.
PCT/JP2017/031770

A. CLASSIFICATION OF SUBJECT MATTER
*A23L5/00*(2016.01)i, *B65D65/40*(2006.01)i

According to International Patent Classification (IPC) or to both national classification and IPC

B. FIELDS SEARCHED

Minimum documentation searched (classification system followed by classification symbols)
A23L5/00, B65D65/40

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)
JSTPlus/JMEDPlus/JST7580(JDreamIII), WPIDS/CAplus/FSTA(STN)

C. DOCUMENTS CONSIDERED TO BE RELEVANT

| Category* | Citation of document, with indication, where appropriate, of the relevant passages | Relevant to claim No. |
|---|---|---|
| X<br>Y | JP 3147064 U (Yukiko SAITO),<br>11 December 2008 (11.12.2008),<br>claims; paragraphs [0001], [0009], [0016] to [0017], [0019] to [0021]<br>(Family: none) | 1,4,7-12<br>2-3,5-7,9-12 |
| X<br>Y | JP 2003-063555 A (Tsuneo KAMIYA),<br>05 March 2003 (05.03.2003),<br>claims; paragraphs [0015] to [0016], [0018]<br>(Family: none) | 1,4,7-12<br>2-3,5-7,9-12 |
| Y | JP 2011-153210 A (Hitachi Chemical Filtec Inc.),<br>11 August 2011 (11.08.2011),<br>claims; paragraphs [0001], [0020]; example 1<br>(Family: none) | 2-3,5-7,9-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 October 2017 (06.10.17) | 17 October 2017 (17.10.17) |

| Name and mailing address of the ISA/ | Authorized officer |
|---|---|
| Japan Patent Office<br>3-4-3,Kasumigaseki,Chiyoda-ku,<br>Tokyo 100-8915,Japan | Telephone No. |

Form PCT/ISA/210 (second sheet) (January 2015)

**INTERNATIONAL SEARCH REPORT**

International application No.
PCT/JP2017/031770

C (Continuation). DOCUMENTS CONSIDERED TO BE RELEVANT

| Category* | Citation of document, with indication, where appropriate, of the relevant passages | Relevant to claim No. |
|---|---|---|
| A | Mikio DOI, "Kaimen Seigyo Gijutsu o Riyo shita Shokuhin'yo Nyukazai no Jushi eno Shintenkai -Plastic·Toryoyo no Filler Bunsan·Nendo Choseizai", Plastics, 2006, vol.57, no.9, pages 57 to 61, particularly, page 58, left column to page 60, left column | 1-12 |
| A | Kazunori OI et al., "Recent Development of Polyglycerol Fatty Acid Esters and Hydroxy-containing Fatty Acid Derivatives(1)", fine chemical, 1999, vol.28, no.20, pages 5 to 11, particularly, page 9, right column to page 10, left column | 1-12 |
| A | JP 2013-248822 A (Sato Holdings Corp.), 12 December 2013 (12.12.2013), (Family: none) | 1-12 |
| A | JP 2008-041033 A (Toppan Printing Co., Ltd.), 21 February 2008 (21.02.2008), (Family: none) | 1-12 |
| A | JP 3108826 U (Japan Patent Management Co., Ltd.), 28 April 2005 (28.04.2005), (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001161533 A